(19)

**Europäisches Patentamt**

**European Patent Office**

**Office européen des brevets**

(11) **EP 4 579 437 A1**

(12) **EUROPEAN PATENT APPLICATION**

(43) Date of publication:
**02.07.2025 Bulletin 2025/27**

(21) Application number: **24159030.6**

(22) Date of filing: **22.02.2024**

(51) International Patent Classification (IPC):
**G06F 7/544** (2006.01)     **G06F 17/16** (2006.01)

(52) Cooperative Patent Classification (CPC):
**G06F 7/5443; G06F 17/16;** G06F 2207/4814

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 EP 23220588**

(71) Applicant: **IHP GmbH - Innovations for High Performance Microelectronics / Leibniz-Institut für innovative Mikroelektronik
15236 Frankfurt (Oder) (DE)**

(72) Inventors:
- **UHLMANN, Max
  15236 Frankfurt (Oder) (DE)**
- **KAHMEN, Gerhard
  15236 Frankfurt (Oder) (DE)**
- **OSTROVSKYY, Philip
  15236 Frankfurt (Oder) (DE)**

(74) Representative: **Eisenführ Speiser
Patentanwälte Rechtsanwälte PartGmbB
Stralauer Platz 34
10243 Berlin (DE)**

(54) **LINEARIZATION OF CHARGE-REDISTRIBUTION BASED VECTOR MATRIX MULTIPLIER**

(57)     In the field of programmable in-memory computing devices for performing vector-matrix multiplication, an accumulator circuit for a charge-redistribution based vector-matrix multiplier is provided. The accumulator circuit provides column summation output voltages, which are linearized as a function of the capacitances of the matrix memory components associated with the summation charge storage component of a given column, by eliminating a non-linearity caused by the parallel connection of capacitances of the summation charge storage component and its associated matrix memory components in the column.

Fig. 1

**Description**

The present invention is in the field of programmable in-memory computing devices for performing multiplication of an input vector with an input matrix. It is directed to an accumulator circuit for a charge-redistribution based vector-matrix multiplier, to a vector-matrix multiplier, and to a method for operating a charge-redistribution based vector-matrix multiplier.

In mathematics, a matrix is an array or table of numbers or expressions arranged in rows and columns. Matrix operations involve multiplying individual factors and adding up (accumulating) whole column products to produce a result. Matrix operations play an important role in numerous technical applications such as image processing, signal processing, cryptography, and in the field of artificial intelligence (AI). Matrix operations play a central role in artificial neural networks (ANNs).

ANN models that use in-memory computing (IMC) devices mimick information processing capabilities of the human brain to solve complex computational problems. The advantages of such approaches are that the computational operation and the storage of the data take place locally at the same place and thus the amount of data transport is minimized. Furthermore, topologies or structures are chosen that inherently perform the desired operation and are therefore also very time and energy efficient compared to classical approaches.A vector-matrix multiplier circuit constitutes the core of such IMC devices in ANNs and is responsible for performing the fundamental mathematical operation that underlie the network's computations. To meet increasing computational demands of modern ANN models, it is imperative to provide IMC devices that strike a balance between precision, power efficiency, and scalability. Different known approaches use for example static random access memory (SRAM) cells or resistive random access memory (RRAM) cells to implement an analog operational principle of synaptic elements in order to achieve improved power efficiency.

Vector-matrix multiplication (VMM) is a frequently-used operation in computing, real-time signal processing, and machine learning. In-memory computing devices have been developed to accelerate computing operations such as VMM, in particular by avoiding a transport of data between a processor and a storage system required in implementations of the classical von Neumann computer architecture. For performing VMM or other operations, IMC devices suitably have a matrix structure of matrix memory components. The matrix memory component forms the elementary building block or memory cell, which is replicated in desired numbers in an in-memory computing device. The individual matrix memory components are electrically arranged and connected to represent matrix component rows and matrix component columns of the storage component matrix.

EP 4 210 055 A1 discloses a storage component matrix for performing in-memory multiplication of an input vector with an input matrix. The in-memory computing concept disclosed in EP 4 210 055 A1 is based on a charge-redistribution approach. This approach involves an input-dependent charging of a tuneable capacitance for implementing the individual multiplication of an input vector value and an input matrix value in a given matrix memory component, and a subsequent accumulation of the charges from the different matrix memory components of a given matrix column in a respective column summation charge storage component.

It is an object of the present invention to provide a vector-matrix multiplier with high computational accuracy that is based on the charge-redistribution approach.

Such a vector-matrix multiplier has a matrix arrangement of tunable matrix memory components for representing a matrix of weight matrix values. The matrix memory components are individually tunable in their capacitance value to represent a respective weight matrix value and electrically arranged in parallel along matrix columns, each matrix column providing respective a summation charge representing a sum of partial products of an input voltage vector with respective capacitance values of the memory components in the matrix column. It is noted that a tunable capacitance is to be understood broadly in the sense that the amount of the capacitance is adjustable by a suitable control signal. In different embodiments, this may refer to a discrete set of capacitance values that are available to select from using the control signal, or to a continuous range or interval of capacitance values to select from using the control signal.

Each individual matrix memory component thus represents an elementary product of a vector component with a weight matrix value associated with the given matrix memory component. The results are added up in a column. These results in turn represent the result vector of the vector matrix multiplication. It is noted that while the present description mostly speaks of an addition of such elementary products in a column of the vector matrix multiplier, an equivalent description of vector matrix multiplication can be given, in which the elementary products are added up along a row to build the individual components of the result vector of the vector matrix multiplication.

An accumulator circuit according to a first aspect of the present invention for such a charge-redistribution based vector-matrix multiplier comprises

-    an accumulator input interface comprising a number of switchable accumulator input ports, each receiving, in a closed switching state, a respective summation charge input corresponding to a sum of charge outputs provided by a set of tunable matrix memory components associated with a respective matrix column of the vector-matrix multiplier; and

- connected to each accumulator input port,

  - a respective summation charge storage component, which in the closed switching state is in a parallel connection with the matrix memory components associated with a respective matrix column, to receive and store the summation charge input provided by the respective matrix column; and

  - a linearized output device, which is configured

    - to receive a column weight sum signal that is indicative of a sum of the current capacitance values of the summation charge storage component and its associated matrix memory components, and
    - using the summation capacitance value, the stored summation charge input, and the column weight sum signal, to provide a column summation output voltage, which is linearized as a function of the capacitances of the matrix memory components associated with the summation charge storage component, by eliminating a non-linearity caused by the parallel connection of capacitances of the summation charge storage component and its associated matrix memory components.

The present invention is based on the recognition that a parallel connection of the capacitances of the matrix memory components and the summation charge storage component results in a non-linear dependence of the output voltage on the capacitive weight values and thus may lead to inaccurate results of the multiplication. Thus, while the input voltages are linearly correlated to the output voltage, an increase of the capacitive weight values exhibits a non-linear behavior distorting the expected result of the VMM for different sets of weight coefficients.

The accumulator circuit of the present invention solves this issue and achieves a linear dependence which facilitates improved accuracy of operation of the vector-matrix multiplier.

According to a first embodiment, the respective linearized output device associated with a given summation charge storage component comprises the following:

- a controllable variable gain amplifier, which is connected downstream of (in particular subsequent to) the summation charge storage component and is configured to amplify the column output voltage using a controllable gain factor, and

- a gain controller, which is configured to receive the column weight sum signal to control the gain factor of the variable gain amplifier to the value indicated by the column weight sum signal.

To save energy, the gain controller may be configured to sense the column weight sum signal and to operate in an idle mode while the column weight sum signal is found constant, and to operate in an active mode only in response to detecting a change in the column weight sum signal, in order to adapt the gain factor of the variable gain amplifier. In the idle mode, the gain controller suitably thus operates only those parts of its gain-controller circuitry that are required for detecting a change in the column weight signal, while the other parts are provided with reduced power or no power.

In a second embodiment which forms an alternative to the first embodiment, the linearized output device connected to a given accumulator input port comprises

- a summation charge storage component which is tunable to assume the summation capacitance value within a pre-defined tuning range; and

- a summation capacitance controller, which is configured, using the column weight sum signal, to set the summation capacitance value to a value that equals a difference between the maximum capacitance value and the value indicated by the column weight sum signal.

In the accumulator circuit of the second embodiment, the pre-defined tuning range of the summation charge storage component may extend from a pre-defined minimal capacitance value to a pre-defined maximal capacitance value. The minimal capacitance value, which thus forms a lower boundary of the tuning range, may be a non-zero value. However, a minimal capacitance value of 0 Farad is also possible. In fact, an advantage of using 0 Farad as the minimal capacitance value is that it avoids the requirement of subtracting an offset afterwards, for example in connection with a digital signal processing. The pre-defined maximal capacitance value, which thus forms an upper boundary of the tuning range, may correspond to the sum of the minimal capacitance value and a pre-defined maximal summation capacitance value. The predefined maximal summation capacitance value associated with a given summation charge storage component is the sum of respective maximum capacitance values of the matrix memory components that are connected with the summation charge storage component in the summation phase of operation (cf. below). However, larger values of the upper limit of the tuning range may be chosen if desired in a given application case.

In a preferred variant of the second embodiment, the summation capacitance controller is configured to sense the column weight sum signal and to switch to an idle mode while the column weight sum signal is found constant, and to switch to an active mode to adapt the summation capacitance value only in response to detecting a change in the column weight sum signal. This saves energy otherwise spent on unnecessary signalling. With regard to an implementation of the idle mode, reference is made to the description above regarding the corresponding variant of the first embodiment.

A second aspect of the present invention is formed by a vector-matrix multiplier which comprises

- a matrix arrangement having a number of matrix columns of matrix memory components formed by tunable charge storage components for representing a matrix of weight matrix values; wherein

    - the matrix memory components are individually tunable in their capacitance value to represent a respective weight matrix value, and are configured to receive a respective input voltage vector component value of an input voltage vector representing an input vector that is to be multiplied with the matrix of weight matrix values; and wherein

    - the matrix memory components of a given matrix column of the of the vector-matrix multiplier are configured to provide respective charge outputs of an amount corresponding to a product of the respective weight matrix value and the received respective input voltage vector component value of the input voltage vector;

- an output interface having a number output ports corresponding to the number of matrix columns for providing accumulated charge output of the matrix memory components of the given column;

- a linearization controller, which is configured to generate and provide a column weight sum signal that is indicative of a sum of the current capacitance values of the summation charge storage component and its associated matrix memory components; and

- an accumulator circuit according to any embodiment of the accumulator circuit of the first aspect of the present invention, which receives the column weight signal, wherein the input interface of the accumulator circuit is connected to the output interface of matrix arrangement of matrix memory components.

The vector-matrix multiplier of the second aspect of the invention shares the advantages described in the context of the accumulator circuit of the first aspect of the present invention.

The following describes embodiments of the vector-matrix multiplier of the second aspect of the invention.

The vector-matrix multiplier may comprise a matrix input interface for receiving and providing matrix input signals, which uniquely correspond to respective weight matrix values, to the respective matrix memory components, for setting their tunable capacitances accordingly. In another embodiment, it additionally comprises a vector input interface for receiving and feeding input vector signals, which uniquely correspond to respective input vector values of the input vector, to the matrix memory components, for charging their set tunable capacitances accordingly.

In another embodiment, the tunable charge storage component of a given matrix memory component is connected between the vector input interface on its input side and a reference potential, and is tunable by the respective matrix input signal to assume a capacitance value uniquely corresponding to the respective weight matrix value; and

- the vector input interface comprises a respective vector input switch for each matrix memory component, for controlling provision of the respective analog input vector signal, to charge the charge storage component of the respective matrix memory component to a charge amount representing a mathematical product of the respective input vector value and the respective weight matrix value.

In a further embodiment, the matrix memory components of a given matrix column are each followed by a component product accumulation switch for controlling an output of charge stored in the respective matrix memory component.

In another embodiment, the matrix input interface further comprises, connected to each matrix memory component, a respective analog memory device for receiving and storing the respective matrix input signal in the form of an analog voltage, for output to a tuning control input of the tunable charge storage component of the matrix memory component.

Preferably, the vector-matrix multiplier further comprise

- a matrix operation phase controller, which is configured to control operation in one of a respective number of operational phases at a given time, the operational phases comprising:

- a reset phase, in which the matrix memory components and the summation charge storage component are discharged to ground;

- a multiplication phase, in which the input vector signals charge the charge storage components; and

- a summation phase after the multiplication phase, in which the respective charge amounts are transferred from the matrix memory components of the matrix columns to the respective summation charge storage components, for accumulation in the summation charge storage components.

In the summation phase, the transfer of the respective charge amounts achieves a voltage balance between the parallel connection of the matrix memory components in the given column and the summation charge storage component of this column. This means that, at the end of the summation phase, a given matrix memory component will typically not transfer all the charge that was stored in it in the multiplication phase, but still hold a certain remaining charge amount. The reset phase discharges the matrix memory components (and the summation charge storage component) and thus avoids a detrimental effect of this charge remaining in the matrix memory component at the end of the summation phase on the correct storage of the input vector values to be stored next.

According to a third aspect of the present invention, a method for operating a charge-redistribution based vector-matrix multiplier comprises

- receiving respective summation charge inputs, each corresponding to a sum of charge outputs provided by a set of tunable matrix memory components associated with a respective matrix column of the vector-matrix multiplier;

- providing the received summation charge input to a respective tunable summation charge storage component, which is in a parallel connection with the matrix memory components associated with a respective matrix column, to store the summation charge input provided by the respective matrix column; and

- receiving a column weight sum signal that is indicative of a sum of the current capacitance values of the summation charge storage component and its associated matrix memory components, and

- using the summation capacitance value, the stored summation charge input, and the column weight sum signal, to provide a column summation output voltage, which is linearized as a function of the capacitances of the matrix memory components associated with the summation charge storage component, by eliminating a non-linearity caused by the parallel connection of capacitances of the summation charge storage component and its associated matrix memory components.

The method of the third aspect of the invention shares the advantages of the accumulator circuit of the first aspect of the invention.

A first embodiment of the method further comprises

- using the column weight sum signal to control a gain factor of a variable gain amplifier to the value indicated by the column weight sum signal.

- amplifying the column output voltage using the gain factor.

An alternative second embodiment of the method further comprises

- providing a summation charge storage component which is tunable to assume the summation capacitance value within a pre-defined tuning range; and

- using the column weight sum signal, setting the summation capacitance value to a value that equals a difference between the maximum capacitance value and the value indicated by the column weight sum signal.

The description of the corresponding second embodiment of the accumulator circuit herein above provides considerations to be observed regarding the design of the tuning range of the summation charge storage component.

In the following, further embodiments will be described with reference to the enclosed drawings. In the drawings:

Fig. 1    illustrates a circuit architecture of an embodiment of a fully analog VMM;

Fig 2 shows control signals for use in the embodiment of Fig. 1 to perform vector-matrix multiplication;

Fig. 3 shows a signal path of an input voltage during the multiplication phase of the VMM of Fig. 1;

Fig. 4 shows a signal path of an input voltage in a summation phase, in which stored charge on the weight capacitors is transferred to the summation charge storage component;

Fig. 5 illustrates a circuit architecture of another embodiment of a fully analog VMM; and

Fig. 6 demonstrates the effectiveness of the proposed approach in a diagram shown the output voltage of a two input slice, in which one weight capacitor is kept constant and the other one increased over a tuning range with and without an output device that is a linearized output device in accordance with the present invention.

Before turning to the description of the embodiments, a brief outline of vector-matrix multiplication is given. A simple example of a vector-matrix multiplication, hereinafter in short VMM, is given in the following by the multiplication of vector that has two vector values a and b with a 2x2 matrix that has four matrix values W11, W12, W21 and W22:

$$(x1 \quad x2) \cdot \begin{pmatrix} W11 & W12 \\ W21 & W22 \end{pmatrix} = ((x1 \cdot W11 + x2 \cdot W21) \quad (x1 \cdot W12 + x2 \cdot W22))$$

Thus, in a more general notation, a vector-matrix multiplication performed on the input vector xi and a weight matrix Wi,j can be described as

$$(1) \qquad\qquad y_j = \sum_{i=1}^{N} W_{i,j} \cdot x_i$$

where yj is the output vector.

Generally, the values of the vector and of the matrix can be any number or mathematical expression. Furthermore, the present specification refers to the vector values as input vector values, and to the matrix values as weight matrix values. However, the naming of the input signals to the vector-matrix multiplier is not meant to imply any limitation regarding the meaning of the signals or the spectrum of application cases that can be covered. Names given in the framework of the present specification may have been selected with the purpose of facilitating an intuitive understanding by the reader. In the context of the present specification, the values are represented by electrical signals, as will be described in more detail below. As it is more energy efficient to operate in voltage domain, the following describes a way to obtain the proper VMM result without need for any kind of conversion or opamp circuitry. The input vector is represented by voltages $v_{in,i}$ and, to simplify a neuron circuit design, the output vector $v_{out,j}$ should be represented by voltages $v_{out,j}$ as well:

$$(2) \qquad\qquad v_{out,j} = \sum_{i=1}^{N} W_{i,j} \cdot v_{in,i}$$

While in-memory computing can be performed in the digital or analog domain, the present specification is directed to an in-memory computing concept that works in the analog domain. The analog signal processing performed by the in-memory computing device disclosed in the present specification is advantageous in comparison with digital implementations in particular in terms of required circuit complexity, speed (low number of required clock cycles) and power consumption. The computing operation performed by the individual matrix memory components is a multiplication of analog input signals that represent input vector values and input matrix values. Furthermore, a particularly advantageous solution for the accumulation of determined products is disclosed that avoids issues of non-linearity that may be caused by a parallel connection of capacitances , in correspondence with the mathematical rule for performing VMM.

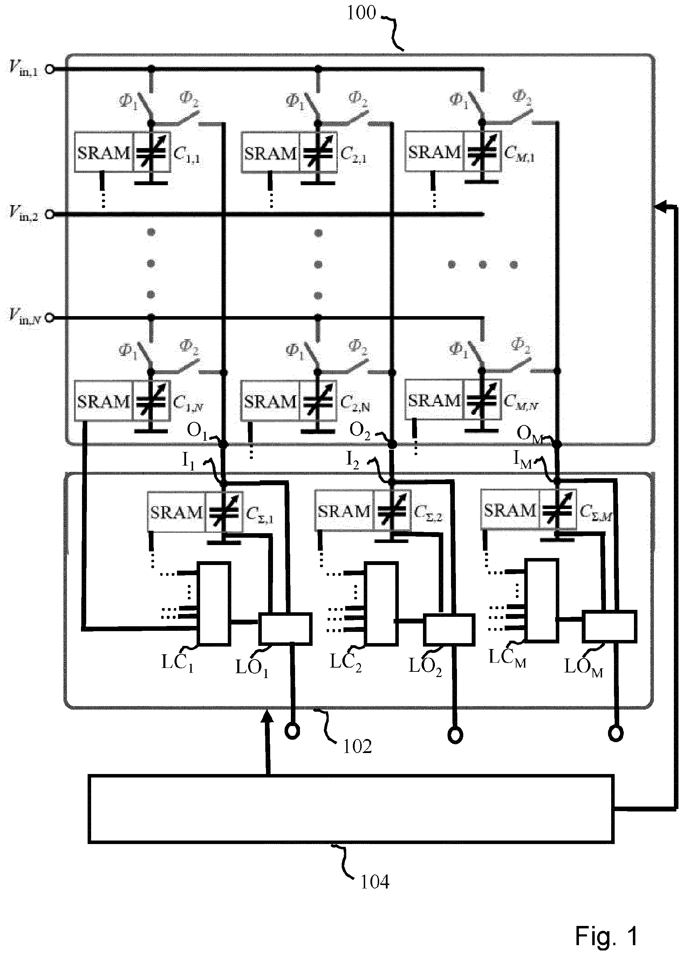

Turning to Fig. 1, a charge-redistribution based vector-matrix multiplier 100 comprises a matrix arrangement 102 of matrix memory components $C_{ij}$, i= 1, 2, ...M, j = 1, 2, ....N, in M matrix columns and N matrix rows. The memory components are connected between a vector input device and a reference potential such as a ground potential. The memory components $C_{ij}$ are formed by tunable charge storage components such as capacitors. The memory components $C_{ij}$ are individually tunable in their capacitance value to assume a capacitance value that represents a respective matrix value, for instance a weigh matrix value. They are configured to receive a respective input voltage vector component value of an input voltage vector representing an input vector that is to be multiplied with the matrix. The tunable capacitors can thus be used as a synaptic element and their capacitance values represent a respective synaptic weight. Thus, the values of tunable capacitances $C_{ij}$ represent a synaptic weight matrix, while the voltages Vinj applied to the tunable capacitances

$C_{ij}$ of a given column i represent an input vector.

Different types of tunable charge storage component may be used as the memory components $C_{ij}$, of the vector-matrix multiplier 100. In some embodiments, the tunable charge storage component is a semiconductor component, and in particular implemented by a p-n junction or a MIS structure of the semiconductor component. In the first case, the semiconductor component is for instance a diode, a varactor orvaricap diode, or a bipolar transistor. In the second case, the semiconductor component is for instance a MIS capacitor, such as the well-known gate layer/insulator layer/semiconductor layer structure of a MOS transistor or MOS varactor. All these semiconductor components can be fabricated using a known MOS technology such as a CMOS or BiCMOS technology. The thickness of a depletion layer of a reverse-biased pn junction or MOS layer structure varies with the DC voltage applied and provides for a tunable capacitance.

In other embodiments, the tunable charge storage component is a C-DAC which can be binary weighted having a plurality of capacitors arranged in parallel, each capacitor corresponding in capacitance value to a power of 2. In this embodiment, the matrix input signal is preferably implemented as a digital binary signal. The individual bit values of this matrix input signal control activation or deactivation of the capacitances of the tunable charge storage component in correspondence with the respective input matrix value. SRAM memory cells contain the capacitance values to be configured for the tunable charge storage components. The SRAM memory cells are initially written to after the system has been switched on. They then hold the current values for the n-bit configurable capacitances of the tunable charge storage components, for controlling transmission gates, which activate the binary-weighted individual capacitors contributing to the capacitances of the tunable charge storage components. Other types of C-DACs, in particular a C-DAC that is not binary weighted can be used as well, with corresponding adaptation of the matrix input signal. Alternatively, a C-DAC can consist of several fixed capacitors (MIM or interdigital), which may be similarly switched via FET transmission gates.

The matrix memory components $C_{ij}$, of a given matrix column of the of the vector-matrix multiplier are configured to provide respective charge outputs of an amount corresponding to a product of the respective weight matrix value and the received respective input voltage vector component value of the input voltage vector.

An output interface of the matrix arrangement 100 has a number output ports O1, O2, ...$O_M$, in correspondence with the number of matrix columns. The output ports of the matrix arrangement 100 serve for providing a charge output of the matrix memory components of the given column for accumulation in an accumulator circuit 102 connected with the vector-matrix multiplier 100. The output ports may be implemented as nodes in a monolithic electrical circuit in which the matrix arrangement of memory components and the accumulator circuit 102 (to be described below) are co-integrated.

A linearization controller is configured to generate and provide a column weight sum signal that is indicative of a sum of the current capacitance values of the summation charge storage component and its associated matrix memory components. The linearization controller may be implemented as a central control unit, or, as shown in Fig. 1, in the form of distributed column linearization controllers $LC_1$, $LC_2$, ..; $LC_M$. SRAM cells contain n-bit values in order to activate respective transmission gates for the individual n-bit configurable capacitances. The provision of the current capacitance values to the linearization controller may be accomplished by providing the respective content of the SRAMs associated with the summation charge storage component and its associated matrix memory components of a given column as an input to an associated column linearization controller $LC_1$, $LC_2$, .., or LCnn, respectively

While Fig. 1 shows the column linearization controllers $LC_1$, $LC_2$, .., or LCnn, as components of the accumulator circuit, this is not mandatory. The linearization controller may for instance be implanted as a central unit (not shown) that integrates the functionalities of the different column linearization controllers shown in Fig. 1. Furthermore, it is noted that the weight values stored in the SRAMs of the matrix memory components may be provided to the column linearization controllers $LC'_1$, $LC'_2$, ..., and $LC'_M$ directly from the SRAMS of the associated columns, as shown in Fig. 1, or instead from a central memory controller (not shown) that is used for writing the weight values to all SRAMs, or from a column memory controller (not shown) that is used for writing the weight values to the SRAMs of a given column. Furthermore, the central memory controller may integrate the column linearization controllers in a single controller unit.

Turning now to the accumulator circuit 102 of the charge-redistribution based vector-matrix multiplier 100, an accumulator input interface comprises a number of switchable accumulator input ports $I_1$, $I_2$, ...$I_M$. each receiving, in a closed switching state, a respective summation charge input corresponding to a sum of charge outputs provided by a set of tunable or adjustable matrix memory components associated with a respective matrix column of the vector-matrix multiplier 100. The input ports may be implemented as nodes of an integrated circuit.

Connected to each accumulator input port is a respective summation charge storage component $C_{\Sigma i}$. which in the closed switching state is in a parallel connection with the matrix memory components associated with a respective matrix column, to receive and store the summation charge input provided by the respective matrix column.

While the input voltages are linearly correlated to the output voltage, an increase of the capacitive weight values is showing non-linear behavior. This non-linear behavior may distort the expected result of the VMM for different sets of weight coefficients. To avoid such distortion, associated with each summation charge storage component $C_{\Sigma i}$ is a linearized output device $LO_i$. The linearized output device $LO_i$ is controlled by the column linearization controller $LC_i$, which determines a column weight sum signal. The column weight sum signal is indicative of a summation capacitance value, which is a sum of the current capacitance values of the summation charge storage component and its associated matrix memory components. Using the summation capacitance value and the column weight sum signal, and the stored summation charge input, the linearized output device provides a column summation output voltage, which is linearized as a function of the capacitances of the matrix memory components associated with the summation charge storage component. The linearization is performed by eliminating a non-linearity caused by the parallel connection of capacitances of the summation charge storage component and its associated matrix memory components, as will be explained further below. The linearized output device $LO_i$ may be a variable gain amplifier controlled by the respective column linearization controller $LC_i$.

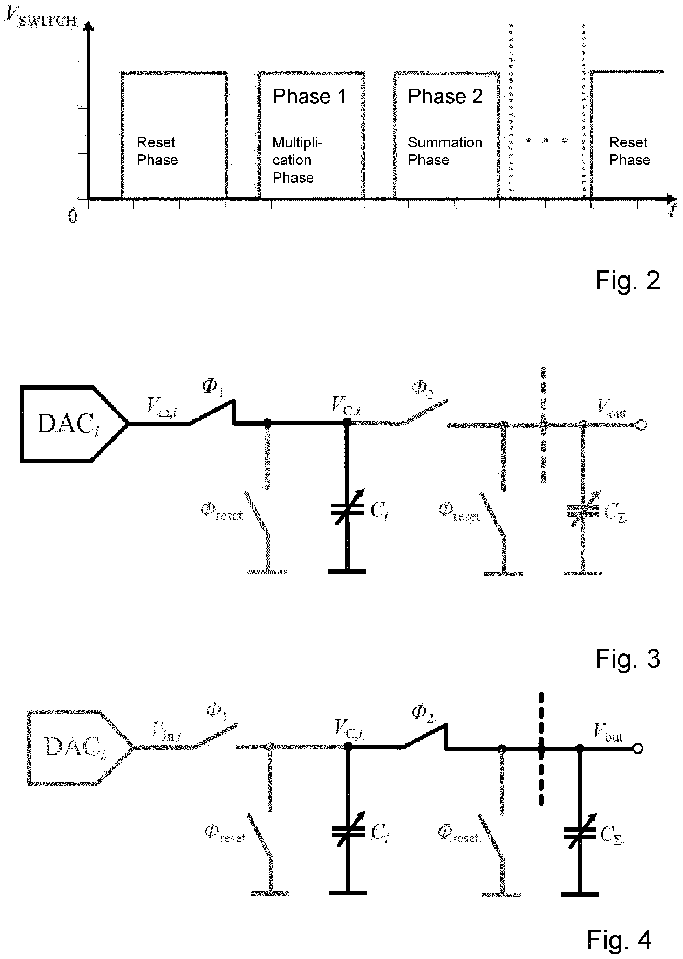

Operation of the VMM 100, as controlled by a matrix operation phase controller 104, is described in more detail in the following. Being capacitor-based, the VMM 100 operates in three phases: reset, multiplication, and summation. The matrix operation phase controller 104 controls operation of the VMM 100 and the accumulator circuit 102 in one of the phases at a time. To this end, it controls the switching state of various switches of the VMM 100 as described in the following with continued reference to Fig. 1, and with additional reference to Figs. 2, 3 and 4. Fig 2 shows a timing of control signals for use in the embodiment of Fig. 1 to perform vector-matrix multiplication. Fig. 3 shows a signal path of an input voltage during a multiplication phase of the VMM of Fig. 1. Fig. 4 shows a signal path of an input voltage in a summation phase, in which stored charge on the weight capacitors is transferred to the summation charge storage component.

Thus, the three consecutive operational phases comprise the following phases:

a) Reset Phase

In the reset phase, the matrix memory components and the summation charge storage component are discharged to ground. In this phase, the switches Φ1 and Φ2 associated with each matrix memory component are open, and a reset switch (not shown in Fig. 1, see Figs. 3 and 4) of the matrix memory components and of the summation charge storage components is closed to connect the high potential side of the matrix memory components and of the summation charge storage components to the reference potential (ground). Thus, during the reset phase the matrix memory components, which may also be called weight capacitors and the summation charge storage components $C_\Sigma$ are discharged to ground.

b) Multiplication phase

In the multiplication phase (cf. Fig. 2), the input vector signals charge the charge storage components. Fig. 3 shows the signal path of the input voltage during the multiplication phase. In this phase, the switch Φ1 associated with any given matrix memory component is closed and the switch Φ2 and the reset switch Φreset associated with any given matrix memory component and any summation charge storage component are open. The multiplication operation is performed by multiplying the input voltage with the capacitive weight value so the stored charge at the nodes equals to

$$(3) \qquad q_i = v_{in,i} \cdot c_i$$

c) Summation Phase

In the summation phase (cf. Fig. 2) after the multiplication phase, in which the respective charge amounts are transferred from the matrix memory components of the matrix columns to the respective summation charge storage components, for accumulation in the summation charge storage components. In this phase, the switch Φ1 and the reset switch associated with any matrix memory component and summation charge storage component are open and the switch Φ2 associated with a given matrix memory component is closed.

The transfer of the respective charge amounts achieves a voltage balance between the parallel connection of the matrix memory components in the given column on the one side, and the summation charge storage component of this column on the other side. This means that, at the end of the summation phase, a given matrix memory component will typically not transfer all the charge that was stored in it in the multiplication phase, but still hold a certain remaining charge amount. Thus, the result for one matrix column is

$$(4) \qquad V_{out} = \frac{\sum_{i=1}^{N} q_i}{\sum_{i=1}^{N} c_i + C_\Sigma}$$

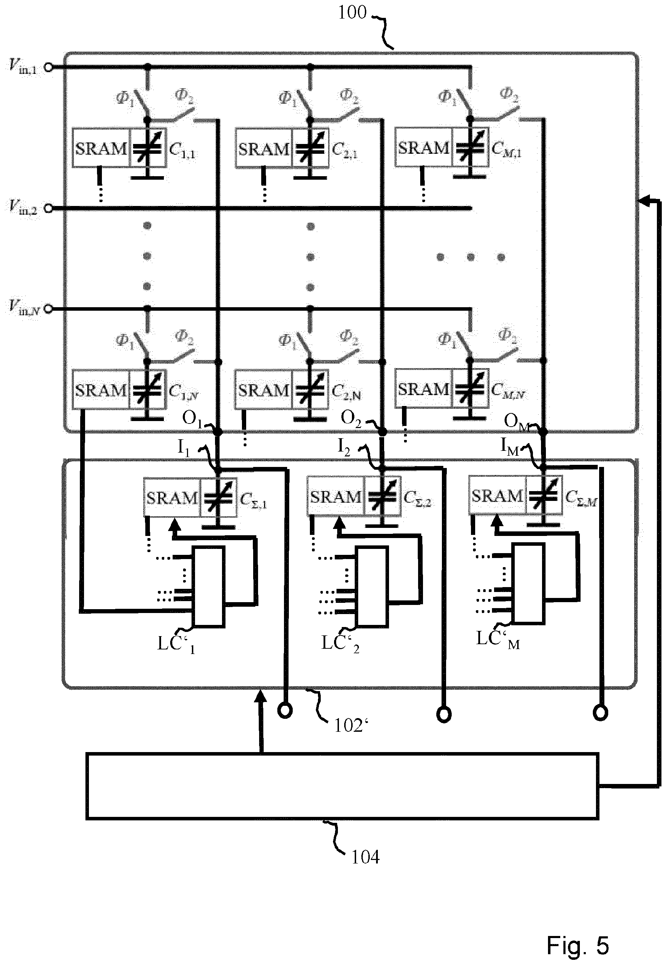

Fig. 5 illustrates a circuit architecture of another embodiment of a fully analog VMM that implements another linearization technique. Generally, structure and operation of the VMM 100 and of the phase controller 104 are identical to that described in the context of the embodiment of Fig. 1, thus maintaining the same reference labels for corresponding structural elements. In the present embodiment, however, the accumulator circuit 102' differs from that in Fig. 1. In order to linearize the weight-output relation, at each change of weight values of the weight capacitors $\mathbf{C}_{i,j}$, the column linearization controllers LC'$_1$, LC'$_2$, .., and LC'$_M$ adjust the capacitance of the summation charge storage component so that the denominator of equation (4) stays constant. When the maximum capacitance of one weight capacitor in a given matrix column is Cweight,max, the equation

$$(5) \qquad C_\Sigma = NC_{weight,max} - \sum_{i=1}^{N} c_i$$

is fulfilled.

It is noted that the weight values stored in the SRAMs of the matrix memory components may be provided to the column linearization controllers LC'$_1$, LC'$_2$, .., and LC'$_M$ directly from the SRAMS of the associated columns, as shown in Fig. 5, or instead from a central memory controller (not shown) that is used for writing the weight values to all SRAMs, or from a column memory controller (not shown) that is used for writing the weight values to the SRAMs of a given column.

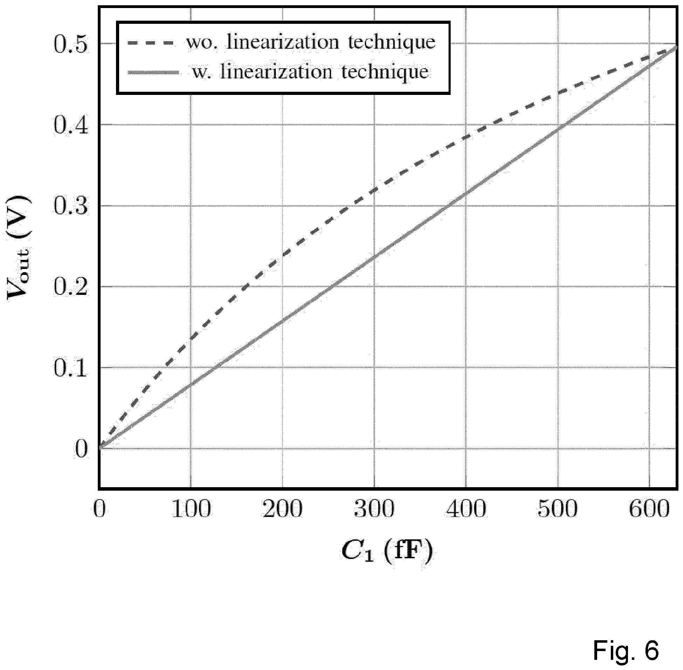

Fig. 6 shows the effectiveness of this approach for a two input slice, in which one weight capacitor is kept constant and the other one was increased from 0 to 630 fF while adjusting the summing capacitor according to (6).

It is noted that only input energy is used to perform vector-matrix multiplication and no additional circuitry is required for conversion from/to voltage/charge domain to get the linear operation of the system. In particular, it is not required to include an opamp in each matrix column to perform accumulation in a linear way, nor a DAC circuit to convert the digitally stored weight values to proportional voltages.

In summary, in the field of programmable in-memory computing devices for performing vector-matrix multiplication, an accumulator circuit for a charge-redistribution based vector-matrix multiplier is provided. The accumulator circuit provides a column summation output voltage for a given matrix column, which is linearized as a function of the capacitances of the matrix memory components of the given column associated with the summation charge storage component, by eliminating a non-linearity caused by a parallel connection of capacitances of the summation charge storage component and its associated matrix memory components in the column.

## Claims

1. An accumulator circuit for a charge-redistribution based vector-matrix multiplier, the accumulator circuit comprising

    - an accumulator input interface comprising a number of switchable accumulator input ports, each receiving, in a closed switching state, a respective summation charge input corresponding to a sum of charge outputs provided by a set of tunable matrix memory components associated with a respective matrix column of the vector-matrix multiplier; and
    - connected to each accumulator input port,

        - a respective summation charge storage component, which in the closed switching state is in a parallel connection with the matrix memory components associated with a respective matrix column, to receive and store the summation charge input provided by the respective matrix column; and
        - a linearized output device, which is configured

            - to receive a column weight sum signal that is indicative of a summation capacitance value, which is a sum of the current capacitance values of the summation charge storage component and its associated matrix memory components, and
            - using the summation capacitance value, the stored summation charge input, and the column weight sum signal, to provide a column summation output voltage, which is linearized as a function of the capacitances of the matrix memory components associated with the summation charge storage component, by eliminating a non-linearity caused by the parallel connection of capacitances of the summation charge storage component and its associated matrix memory components.

2. The accumulator circuit of claim 1, wherein the respective linearized output device associated with a given summation charge storage component comprises

    - a controllable variable gain amplifier, which is connected downstream of the summation charge storage component and is configured to amplify the column output voltage using a controllable gain factor, and
    - a gain controller, which is configured to receive the column weight sum signal to control the gain factor of the variable gain amplifier to the value indicated by the column weight sum signal.

3. The accumulator circuit of claim 1, wherein the linearized output device connected to a given accumulator input port comprises

- a summation charge storage component which is tunable to assume the summation capacitance value within a pre-defined tuning range; and
- a summation capacitance controller, which is configured, using the column weight sum signal, to set the summation capacitance value to a value that equals a difference between the maximum capacitance value and the value indicated by the column weight sum signal.

4. The accumulator circuit of claim 3, wherein the tuning range of the summation charge storage component extends from a pre-defined non-zero minimal capacitance value to a maximal capacitance value that corresponds to the sum of the minimal capacitance value and a pre-defined maximal summation capacitance value.

5. The accumulator circuit of claim 3 or 4, wherein the maximal summation capacitance value of a given summation charge storage component is the sum of respective maximal capacitance values up to which the matrix memory components associated with the summation charge storage component are tunable.

6. The accumulator circuit of any of the claims claim 3 to 5, wherein the summation capacitance controller is configured to sense the column weight sum signal and to switch to an idle mode while the column weight sum signal is found constant, and to switch to an active mode to adapt the summation capacitance value only in response to detecting a change in the column weight sum signal.

7. A vector-matrix multiplier, comprising

- a matrix arrangement having a number of matrix columns of matrix memory components formed by tunable charge storage components for representing a matrix of weight matrix values, wherein
- the matrix memory components are individually tunable in their capacitance value to represent a respective weight matrix value, and are configured to receive a respective input voltage vector component value of an input voltage vector representing an input vector that is to be multiplied with the matrix of weight matrix values; and wherein
- the matrix memory components of a given matrix column of the of the vector-matrix multiplier are configured to provide respective charge outputs of an amount corresponding to a product of the respective weight matrix value and the received respective input voltage vector component value of the input voltage vector;
- an output interface having a number output ports corresponding to the number of matrix columns for providing accumulated charge output of the matrix memory components of the given column;
- a linearization controller, which is configured to generate and provide a column weight sum signal that is indicative of a sum of the current capacitance values of the summation charge storage component and its associated matrix memory components; and
- an accumulator circuit according to any of claims 1 to 5, which receives the column weight signal, wherein the input interface of the accumulator circuit is connected to the output interface of matrix arrangement of matrix memory components.

8. The vector-matrix multiplier of claim 7, further comprising

- a matrix input interface for receiving and providing matrix input signals, which uniquely correspond to respective weight matrix values, to the respective matrix memory components, for setting their tunable capacitances accordingly; and
- a vector input interface for receiving and feeding input vector signals, which uniquely correspond to respective input vector values of the input vector, to the matrix memory components, for charging their set tunable capacitances accordingly.

9. The vector-matrix multiplier of claim 7 or 8, wherein

- the tunable charge storage component of a given matrix memory component is connected between the vector input interface on its input side and a reference potential, and is tunable by the respective matrix input signal to assume a capacitance value uniquely corresponding to the respective weight matrix value; and

- the vector input interface comprises a respective vector input switch for each matrix memory component, for controlling provision of the respective analog input vector signal, to charge the charge storage component of the respective matrix memory component to a charge amount representing a mathematical product of the respective input vector value and the respective weight matrix value.

10. The vector-matrix multiplier of any of the claims 7 to 9, wherein

- the matrix memory components of a given matrix column are each followed by a component product accumulation switch for controlling an output of charge stored in the respective matrix memory component.

11. The vector-matrix multiplier of any of the claims 7 to 10, wherein

- the matrix input interface further comprises, connected to each matrix memory component, a respective analog memory device for receiving and storing the respective matrix input signal in the form of an analog voltage, for output to a tuning control input of the matrix memory component.

12. The vector-matrix multiplier of any of the claims 7 to 11, further comprising

- a matrix operation phase controller, which is configured to control operation in one of a respective number of operational phases at a given time, the operational phases comprising:

- a reset phase, in which the matrix memory components and the summation charge storage component are discharged to ground;
- a multiplication phase, in which the input vector signals charge the charge storage components; and
- a summation phase after the multiplication phase, in which the respective charge amounts are transferred from the matrix memory components of the matrix columns to the respective summation charge storage components, for accumulation in the summation charge storage components.

13. A method for operating a charge-redistribution based vector-matrix multiplier, the method comprising

- receiving respective summation charge inputs, each corresponding to a sum of charge outputs provided by a set of tunable matrix memory components associated with a respective matrix column of the vector-matrix multiplier;
- providing the received summation charge input to a respective tunable summation charge storage component, which is in a parallel connection with the matrix memory components associated with a respective matrix column, to store the summation charge input provided by the respective matrix column; and
- receiving a column weight sum signal that is indicative of a sum of the current capacitance values of the summation charge storage component and its associated matrix memory components, and
- using the summation capacitance value, the stored summation charge input, and the column weight sum signal, to provide a column summation output voltage, which is linearized as a function of the capacitances of the matrix memory components associated with the summation charge storage component, by eliminating a non-linearity caused by the parallel connection of capacitances of the summation charge storage component and its associated matrix memory components.

14. The method according to claim 13, further comprising

- using the column weight sum signal to control a gain factor of a variable gain amplifier to the value indicated by the column weight sum signal.
- amplifying the column output voltage using the gain factor.

15. The method according to claim 13, further comprising

- providing a summation charge storage component which is tunable to assume a summation capacitance value within a tuning range up to a maximum summation capacitance value; and
- using the column weight sum signal, setting the summation capacitance value to a value that equals a difference between the maximum capacitance value and the value indicated by the column weight sum signal.

Fig. 1

Fig. 2

Fig. 3

Fig. 4

Fig. 5

Fig. 6

| | Europäisches Patentamt European Patent Office Office européen des brevets | **EUROPEAN SEARCH REPORT** | **Application Number** EP 24 15 9030 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 210 055 A1 (IHP GMBH INNOVATIONS FOR HIGH PERFORMANCE MICROELECTRONICS / LEIBNIZ I) 12 July 2023 (2023-07-12)<br>* figures 1-4 *<br>* paragraph [0010] - paragraph [0016] *<br>* paragraph [0060] - paragraph [0072] *<br>- - - - - | 1-15 | INV.<br>G06F7/544<br>G06F17/16 |
| Y | US 2013/207827 A1 (NESTLER ERIC [US] ET AL) 15 August 2013 (2013-08-15)<br>* figures 1-6 *<br>* paragraph [0020] *<br>* paragraph [0123] - paragraph [0143] *<br>* paragraph [0170] - paragraph [0177] *<br>- - - - - | 1-15 | |

**TECHNICAL FIELDS SEARCHED (IPC)**

G06F

The present search report has been drawn up for all claims

| Place of search | Date of completion of the search | Examiner |
|---|---|---|
| Munich | 1 August 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 9030

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2024

| Patent document cited in search report | | Publication date | Patent family member(s) | | Publication date |
|---|---|---|---|---|---|
| EP 4210055 | A1 | 12-07-2023 | NONE | | |
| US 2013207827 | A1 | 15-08-2013 | CN | 103125071 A | 29-05-2013 |
| | | | EP | 2532177 A2 | 12-12-2012 |
| | | | EP | 3133737 A1 | 22-02-2017 |
| | | | US | 2013207827 A1 | 15-08-2013 |
| | | | US | 2014233773 A1 | 21-08-2014 |
| | | | WO | 2012024507 A2 | 23-02-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4210055 A1